# FASCICULE DE BREVET EUROPEEN

(11) **EP 0 506 644 B1**
(45) Date de publication et mention de la délivrance du brevet: **23.08.1995**
(21) Numéro de dépôt: 92870013.7
(22) Date de dépôt: 17.01.1992
(51) Int. Cl.: A01K 9/00, A01K 5/02

(54) **Appareil pour le dosage d'un aliment liquide en particulier à des porcelets**
Vorrichtung zur Nassfutterdosierung für Tiere, insbesondere für Ferkel
Apparatus for dosing liquid feed especially for piglets

(30) Priorité: 25.03.1991 BE 9100275
(43) Date de publication de la demande: 30.09.1992
(73) Titulaire: Verhaeghe, Raf, B-8970 Poperinge (BE); Verschaeve, Maurice, B-8970 Reningelst-Poperinge (BE)
(72) Inventeur: Verhaeghe, Raf, B-8970 Poperinge (BE); Verschaeve, Maurice, B-8970 Reningelst-Poperinge (BE)
(74) Mandataire: Pieraerts, Jacques

(56) Documents cités:
- EP-A- 0 391 602
- EP-A- 0 413 319
- DE-A- 2 620 686
- FR-A- 1 569 714

## Description

Cette invention concerne un appareil pour le dosage d'un aliment liquide, tel que du lait, destiné en particulier à des porcelets privés de leur mère et/ou à des porcelets élevés par la truie, ainsi qu'à d'autres animaux tels que par exemple des chiots, appareil qui comprend une enceinte fermée (1) pour un réservoir (3) destiné à l'aliment liquide et comporte:
a) à la partie inférieure, au moins d'un côté, mais de préférence des deux côtés longitudinaux, une rigole d'abreuvement (2, 2');
b) une pompe (4) avec une conduite d'évacuation (9) pour pomper l'aliment liquide à partir du réservoir (3) dans lesdites rigoles d'abreuvement (2, 2');
c) des moyens de contrôle pour activer ladite pompe (4) à des moments prédéterminés en vue de pomper dans les rigoles d'abreuvement (2, 2') une dose d'aliment liquide.

Un appareil de l'espèce est connu grâce à la demande européenne EP-A-0 413 319. Dans cet appareil connu, une pompe immergée disposée dans le réservoir destiné à la liquide, pompe grâce à laquelle via une conduite d'évacuation qui traverse le fond du récipient, un aliment liquide peut être pompé dans la rigole d'abreuvement. Cette conduite d'évacuation débouche, en particulier, au centre de la rigole d'abreuvement qui évacue vers les deux extrémités de telle sorte que les porcelets qui se situent à proximité de ces extrémités recevront plus d'aliment liquide. L'appareil de type connu comporte en outre une minuterie grâce à laquelle la pompe peut être activée à des moments prédéterminés chaque fois pendant à un laps de temps prédéterminé.

Un inconvénient de cet appareil connu réside dans le fait qu'il est difficile de régler la minuterie au préalable de telle manière que les porcelets reçoivent toujours la dose exacte d'aliment liquide. Cette dose dépend en effet d'un nombre de facteurs tels que le nombre, l'âge ou le poids des porcelets et, en outre, également de facteurs plus difficiles à déterminer tels que la santé des porcelets.

En raison, entre autres, de la croissance des porcelets, la dose à l'heure administrée évolue rapidement dans le temps de telle sorte que l'appareil doit régulièrement être réglé à nouveau.

Un autre inconvénient de cet appareil connu est que lorsque les porcelets deviennent subitement malades ou lorsque un ou plusieurs porcelets meurent, la dose fournie est trop élevée ce qui nécessite un contrôle permanent.

En dehors de l'appareil connu décrit ci-dessus il existe encore d'autres appareils qui donnent des résultats toutefois insuffisants et cela pour les diverses raisons exposées ci-dessous:

La plupart des appareils ou machines, tels qu'entre autres l'appareil selon le document EP-A-0 413 319 sont conçus d'une manière primitive et exigent un réglage manuel journalier. D'autres appareils sont d'une telle complexité mécanique qu'ils exigent trop de travail de nettoyage ou sont fort difficiles à nettoyer.

D'autres appareils encore conservent le lait à froid et le réchauffent au moment où il doit être fourni aux porcelets.

Des appareils plus sophistiqués préparent le lait dans la machine en mélangeant des quantités déterminées de poudre de lait et d'eau (généralement portées à température) jusqu'à obtention d'un lait artificiel et la distribution de la quantité souhaitée de lait aux porcelets se fait alors de manière automatique à des intervalles de temps prédéterminés.

Certains appareils fournissent du lait qui doit être allongé, ce qui rend plus difficile la distribution générale du produit à cause des exigences sévères visant sa conservation.

Tous les appareils doivent être nettoyés régulièrement, en réalité journellement, et cela pour éviter la diarrhée chez les porcelets. Certains appareils sont nettoyés automatiquement, d'autres de manière semi-automatique ou manuelle. Tout ceci rend ces appareils, soit fort chers, soit non pratiques et leur utilisation est peu simple.

Vu la brièveté du temps de conservation du lait artificiel acidifié (24 à 30 heures) ceci constitue le problème principal lorsqu'on élève des porcelets de façon artificielle. Ces appareils exigent donc de fréquents nettoyages et un nettoyage peu soigné des pompes et conduites provoque fatalement la diarrhée chez les porcelets.

La plupart de ces appareils consomment donc du lait artificiel acidifié, ce qui permet de prolonger quelque peu le temps de conservation, mais le lait acidifié est moins appétissant et conduit à des résultats moins favorables lors de l'élevage des porcelets.

L'invention a pour but de réaliser un appareil pour le dosage d'un aliment liquide qui est de construction simple et n'exige, quant à son fonctionnement qu'un contrôle minimum.

A cet effet, lesdits moyens de contrôle comportent un système de détection en vue de déterminer le laps de temps au cours duquel les porcelets ont consommé la dose pompée dans les rigoles d'abreuvement et des moyens de correction pour adapter une dose suivante en fonction de ce laps de temps.

On a constaté que le laps de temps au cours duquel les porcelets s'alimentent est une bonne indication quant au fait de savoir si les porcelets ont, ou non, reçu une quantité exacte d'aliment. Normalement, les porcelets exigent un même laps de temps pour consommer la quantité optimale d'aliment. En fonction du laps de temps mesuré, la dose optimale peut donc être adaptée, ce qui se produira lorsque un ou plusieurs porcelets meurent ou tombent malades.

Dans une forme d'exécution avantageuse de l'appareil selon l'invention, lesdits moyens de correction sont prévus en vue d'augmenter la dose suivante lorsque le laps de temps mesuré est inférieur à un laps de temps minimum prédéterminé et pour diminuer la dose, lorsque le laps de temps mesuré est supérieur à un laps de temps prédéterminé.

De préférence, les moyens de contrôle sont prévus en vue d'augmenter la dose à servir en fonction du stade de développement des porcelets.

D'autres détails et avantages de l'invention ressortiront de la description qui sera donnée ci-après d'un appareil pour le dosage d'un aliment liquide, en particulier à des porcelets, selon l'invention. Cette description n'est donnée qu'à titre d'exemple et ne limite pas l'invention. Les notations de référence se rapportent aux figures ci-jointes.

La figure 1 est une représentation schématique de l'appareil selon l'invention.

La figure 2 illustre la manière dont l'aliment liquide est amené vers les rigoles d'abreuvement, selon une première forme d'exécution.

La figure 3 représente, à une échelle plus grande, un détail de l'invention appliqué à la forme d'exécution selon la figure 2.

La figure 4 est une vue analogue à la figure 2 mais se rapporte à une autre forme d'exécution possible.

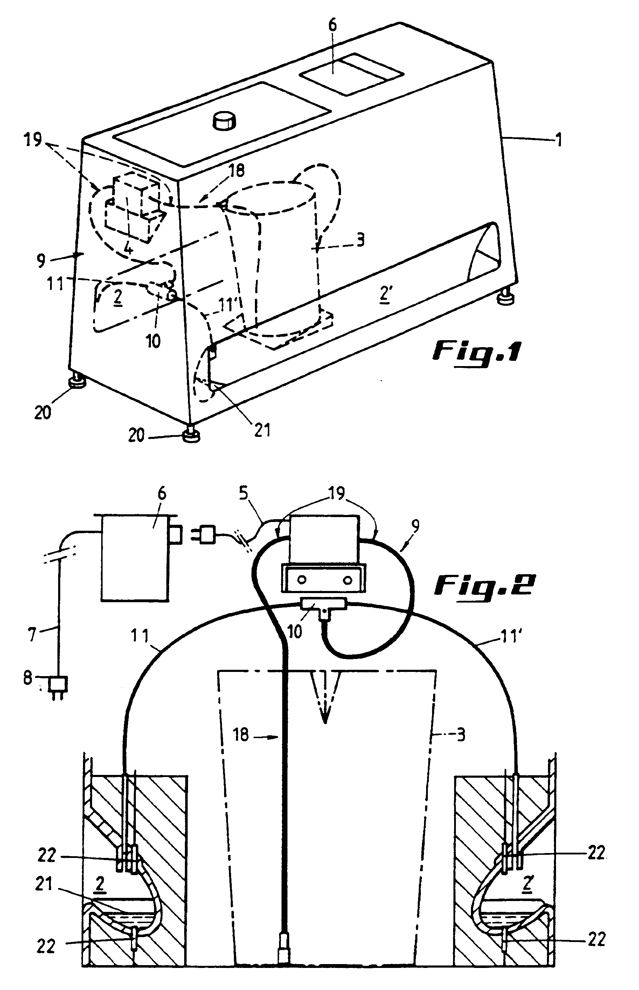

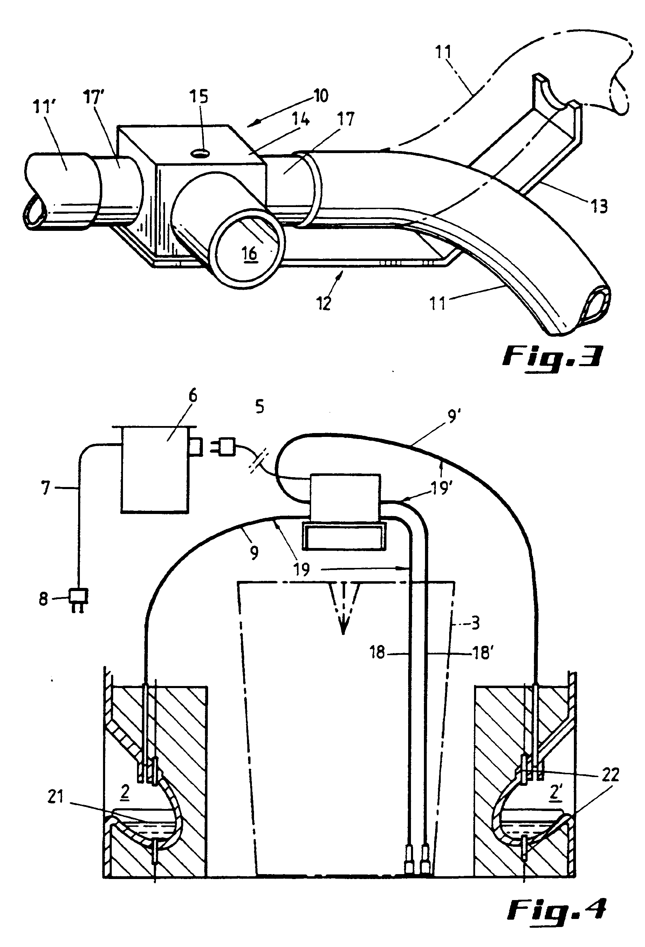

L'appareil représenté par la figure 1 comporte une enceinte fermée 1 et deux rigoles d'abreuvement 2, 2'. Les rigoles d'abreuvement présentent, ainsi qu'il résulte de la figure 2, un profil tel que les porcelets peuvent s'y abreuver aisément et ne peuvent pas les souiller.

L'aliment liquide servi aux porcelets est appelé ci-après "lait". On désigne de la sorte du lait naturel ou artificiel acidifié ou traité de toute autre manière. Le lait est amené dans l'enceinte fermée dans un réservoir à lait 3. Ledit réservoir à lait repose sur le sol de l'enceinte fermée 1 et est disposé de préférence en biais. Dans l'enceinte fermée est disposée une pompe 4, de préférence une pompe électrique, volumétrique péristaltique. La pompe 4 est reliée électriquement par un conducteur 5 à la commande électronique 6. Les références 7 et 8 représentent respectivement un conducteur de raccord et une fiche de contact par lesquels l'appareil est relié au réseau électrique.

Dans la forme d'exécution selon la figure 1, il part de la pompe 4, d'une part, une conduite d'aspiration 18 vers le fond du réservoir à lait 3 et, d'autre part, une conduite d'évacuation 9, qui est subdivisée en deux embranchements à l'aide d'une pièce de répartition 10, en forme de T. Les deux embranchements 11 et 11' conduisent respectivement aux rigoles d'abreuvement 2 et 2'. Il est évident que cet appareil peut aisément être nettoyé du fait qu'aussi bien le récipient à lait 3 que les conduites 18 et 9 peuvent être aisément retirées de l'appareil. Lorsqu'il est fait usage d'une pompe péristaltique 4, il n'est même pas nécessaire d'enlever cette pompe de l'appareil attendu que les conduites 9 et 18 sont alors formées par un seul tuyau souple 19 qui peut aisément être retiré de la pompe péristaltique. L'utilisation d'une pompe péristaltique présente encore l'avantage que le lait n'entre pas en contact avec la pompe même et que des raccords à la pompe ne sont pas nécessaires ce qui réalise un système hygiénique.

Pour faciliter encore l'entretien de la conduite à lait, la pièce de répartition 10 en forme de T ne présente ni vanne ni robinet. Si l'on veut amener du lait vers l'une des rigoles d' abreuvement 2 ou 2', on fait alors usage de la pièce de support 12 telle que représentée à la figure 3. La pièce de support 12 présente un bras 13 dirigé vers le haut sur lequel repose l'un des embranchements 11 ou 11' dont on veut arrêter l'alimentation en lait. Il ne se produit ici aucun effet de siphon parce que la chambre 14 de la pièce de répartition 10 présente une perforation 15.

A la figure 3 la conduite d'alimentation 9 débouche dans la chambre 14 à hauteur de la petite pièce de raccord 16, tandis que des busettes de raccordement 17 et 17' sont prévues pour être raccordées aux embranchements 11 et 11'.

Attendu que la pression dans ces conduites est faible, du lait ne s'écoulera pas par la perforation 15. L'air qui passe par la perforation 15 s'oppose à l'action de siphon à hauteur de l'endroit où l'embranchement correspondant 11 ou 11' repose sur le bras 13 dirigé vers le haut appartenant à la pièce de support 12. De plus, la perforation 15 assure un écoulement pratiquement uniforme du lait pompé vers les deux embranchements 11 et 11'.

Grâce à l'absence de tout élément de robinet dans la pièce de répartition en forme de T, un nettoyage rapide et aisé de celle-ci est assuré.

A la figure 4 est représentée une variante d'une forme d'exécution de l'appareil selon l'invention. Dans cette forme d'exécution, la pompe 4 est une pompe péristaltique équipée de deux tuyaux souples 19 et 19' qui constituent, chacun, une conduite d'aspiration 18 et 18' et une conduite d'évacuation 9 et 9'. Les deux tuyaux 19 et 19' débouchent, d'une part, sur le fond du réservoir à lait 3 et, d'autre part, chacune, dans l'une des deux rigoles d'abreuvement 2 et 2'. En vue du nettoyage de l'appareil, ces deux tuyaux 19 et 19' peuvent aisément être retirés de la pompe péristaltique. Seuls le réservoir à lait 3 et ces tuyaux 19 et 19' doivent être nettoyés. En faisant usage de ces deux tuyaux, l'aliment liquide est toujours réparti uniformément en direction des deux rigoles d'abreuvement 2 et 2'.

Afin que tous les porcelets puissent disposer d'une même quantité d'aliment, les rigoles d'abreuvement 2 et 2' sont disposées horizontalement. A cet effet, la partie inférieure de l'appareil est équipée de quatre vis de réglage 20. Le lait amenée par la conduite d'évacuation 9, 9' parvient aux extrémités des rigoles d'abreuvement 2, 2' sur un plan incliné 21 de telle sorte que le lait s'écoule rapidement vers l'autre extrémité de la rigole d'abreuvement. De plus, le débit de la pompe 4 est suffisamment élevé pour que le lait soit répandu de manière uniforme sur toute la longueur de la rigole d'abreuvement.

Dans l'appareil est monté un module vocal qui reproduit, lorsque le lait a été servi, le grognement spécifique de la truie lorsque celle-ci est prête à allaiter. Le reflex qui pousse les porcelets à s'alimenter s'en trouve activé et les porcelets s'habituent fort rapidement à cette nouvelle méthode d'alimentation. Les porcelets trouvent ainsi simultanément et rapidement l'aliment liquide et peuvent absorber, chacun, une même quantité d'aliment. Dans l'appareil selon le document EP-A-0 413 319, au contraire, il est fait usage d'une rigole d'abreuvement disposée de biais de telle sorte que les porcelets qui se trouvent à l'extrémité la plus inférieure des rigoles d'abreuvement peuvent absorber la plus grande quantité de lait.

L'appareil selon l'invention est d'une commande simple. Sur le clavier de la commande électronique on introduit le nombre de porcelets par appareil et leur âge. Après avoir enfoncé le bouton de départ de l'appareil, celui-ci se trouve dans la position dite "stand by" et, à partir de ce moment, la quantité de lait désiré peut être fournie à des intervalles d'une heure, par exemple, aux porcelets.

L'appareil selon l'invention comporte à cet effet des moyens de contrôle à l'aide desquels la pompe 4 peut être activée à des moments prédéterminés en vue de pomper dans les rigoles d'abreuvement une dose d'aliment liquide. Cette dose est tout d'abord calculée par les moyens de contrôle à l'aide d'une courbe de dosage qui a été stockée en la calculant sur base des données récoltées, telles que le nombre de porcelets, leur âge et/ou leur poids. Les moyens de contrôle continueront à calculer de la sorte la dose à servir et cela en fonction du stade d'évolution, ou en d'autres mots, de l'âge des porcelets. D'un point de vue de l'invention il est essentiel que les moyens de contrôle comportent un système de détection capable de déterminer le laps de temps au cours duquel les porcelets ont absorbé la dose pompée dans la rigole d'abreuvement ainsi que des moyens de correction destinés à adapter la dose suivante en fonction de ce laps de temps. Le système de détection comporte, entre autres, des moyens 22 qui permettent de détecter la présence de l'aliment liquide dans la rigole d'abreuvement.

Les moyens de correction augmenteront la dose suivante lorsque le laps de temps mesuré est inférieur au laps de temps minimum déterminé au préalable. Lorsque, cependant, ce laps de temps mesuré est supérieur à un laps de temps maximal, par exemple, du fait que un ou plusieurs porcelets sont tombés malades ou, même, seraient morts, ils diminueront alors la dose à fournir. Ceci n'empêche pas qu'il soit possible, à chaque instant, de fournir une dose de lait aux porcelets.

L'utilisation d'une pompe péristaltique ou, autrement dite, volumétrique, en combinaison avec ces moyens de contrôle, offre l'avantage qu'une pompe de ce type, connue en soi, permet, à chaque instant, un dosage volumétrique correct, attendu que la quantité d'aliment liquide dosée n'est plus influencée par le type ou la viscosité de l'aliment, ni par la pression manométrique qui varie continuellement en fonction du niveau du liquide dans le réservoir à lait. La viscosité du lait se modifie par exemple lorsque le lait a vieilli et lorsqu'il est soumis à des variations de température. La viscosité dépend également de la concentration en lait. Le débit d'une pompe immergée ou pompe centrifuge dépend, elle, cependant, des deux facteurs cités ci-dessus. Dans l'appareil selon l'invention, équipé d'une pompe péristaltique, la dose calculée est obtenue de façon exacte en permettant à la pompe d'effectuer le nombre de tours désirés.

La commande de la pompe peut également être effectuée à partir d'une unité de commande centrale telle qu'un ordinateur par exemple.

Les nombreux avantages qu'offre l'appareil selon l'invention ressortent très clairement de la description qui vient d'être donnée de cet appareil.

Il est en effet d'une commande simple et un réglage une fois pour toutes pour la période d'élevage complète d'une cochonnée est donc possible.

Le lait artificiel n'est préparé ni par l'appareil ni dans celui-ci mais il est placé dans sa forme dissoute dans l'appareil, de telle sorte qu'on peut servir le lait chaque jour additionné de la quantité nécessaire et du type exacte d'anticorps destiné aux porcelets. Le nettoyage d'éléments souillés par le lait peut avoir lieu en dehors de l'étable. Le réservoir à lait et les conduites à lait peuvent en effet être évacués en quelques secondes sans faire usage d'un quelconque appareil.

L'appareil peut également aisément être déplacé d'une cage de mise bas à une autre lorsqu'il est utilisé pour fournir une alimentation complémentaire.

L'invention n'est pas limitée à la forme d'exécution décrite ci-dessus et bien des modifications pourraient y être apportées sans sortir du cadre de la présente demande.

## Revendications

1. Appareil pour le dosage d'un aliment liquide, tel que du lait, destiné en particulier à des porcelets privés de leur mère et/ou à des porcelets élevés par la truie, ainsi qu'à d'autres animaux tels que par exemple des chiots, appareil qui comprend une enceinte fermée (1) pour un réservoir (3) destiné à l'aliment liquide et comporte:
a) à la partie inférieure, au moins d'un côté, une rigole d'abreuvement (2);
b) une pompe (4) avec une conduite d'évacuation (9) pour pomper l'aliment liquide à partir du réservoir (3) dans ladite rigole d'abreuvement (2);
c) des moyens de contrôle pour activer ladite pompe (4) à des moments prédeterminés en vue de pomper dans ladite rigole d'abreuvement (2) une dose d'aliment liquide, **caractérisé en ce que** lesdits moyens de contrôle comportent un système de détection (22) en vue de déterminer le laps de temps au cours duquel les porcelets ont consommé la dose pompée dans les rigoles d'abreuvement (2, 2') et des moyens de correction pour adapter une dose suivante en fonction de ce laps de temps.

2. Appareil selon la revendication 1, caractérisé en ce que lesdits moyens de correction sont prévus en vue d'augmenter la dose suivante lorsque le laps de temps mesuré est inférieur à un laps de temps minimum prédéterminé et pour diminuer la dose lorsque le laps de temps mesuré est supérieur à un laps de temps maximum prédéterminé.

3. Appareil selon l'une des revendications 1 ou 2, caractérisé en ce que les moyens de contrôle précités sont prévus en vue d'augmenter la dose à servir en fonction du stade de développement des porcelets.

4. Appareil selon l'une des revendications 1 à 3, caractérisé en ce que lesdites rigoles d'abreuvement (2, 2') sont disposés sensiblement horizontalement.

5. Appareil selon l'une des revendications 1 à 4, caractérisé en ce qu'au moins une extrémité de la rigole d'alimentation (2, 2') est équipée d'un plan incliné (21) sur lequel débouche ladite conduite d'évacuation (9, 9') de la pompe (4) de telle façon que l'aliment liquide fourni de manière dosée par cette conduite d'évacuation se répand suffisamment rapidement sur la longueur totale de la rigole d'abreuvement (2, 2').

6. Appareil selon l'une des revendications 1 à 5, caractérisé en ce qu'il comporte au moins deux rigoles d'abreuvement (2, 2'), ladite conduite d'évacuation (9) de la pompe (4) se divisant en deux parties à l'aide d'une pièce de répartition (10) en forme de T, laquelle comprend une chambre (14) qui, à sa partie supérieure, présente une ou plusieurs perforations (15) pour le passage de l'air (7).

7. Appareil selon la revendication 6, caractérisé en ce que la pièce de répartition (10) en forme de T n'est pas équipée d'un robinet ouvert, dans quel but la pièce de répartition (10) repose, par un bras (13) dirigé en oblique vers le haut, sur une pièce de support (12) sur laquelle peut prendre appui, au choix, un des embranchements (11, 11') afin d'empêcher l'écoulement du lait par cet embranchement.

8. Appareil selon l'une des revendications 1 à 7, caractérisé en ce que ladite pompe est une pompe péristaltique (4) pourvue d'au moins un tuyau souple interchangeable (19) qui traverse ladite pompe (14) et s'étend d'un côté de la pompe jusque pratiquement au fond du réservoir (3) pour l'aliment liquide et qui, de l'autre côté, constitue la conduite d'évacuation (9) destinée à amener l'aliment liquide pompé vers les rigoles d'abreuvement (2, 2').

9. Appareil selon la revendication 8, caractérisé en ce que ladite pompe péristaltique (4) est équipée d'au moins deux tuyaux souples interchangeables (19, 19') qui débouchent, chacun d'une part dans le réservoir (3) et, d'autre part, dirigent chaque fois l'aliment liquide vers une rigole d'abreuvement (2, 2').

10. Appareil selon l'une quelconque des revendications 1 à 9, caractérisé en ce qu'il est équipé d'un module vocal qui reproduit le grognement spécifique de la truie et pourvu de moyens destinés à activer ce module vocal lorsque la pompe a été activée.

## Claims

1. Apparatus for dosing out a liquid feed, such as milk, intended in particular for piglets deprived of their mother and/or piglets reared by the sow, as well as for other animals such as puppies for example, which apparatus comprises a closed chamber (1) for a reservoir (3) intended for the liquid feed and includes:
a) at the bottom, at least on one side, a drinking channel (2);
b) a pump (4) with a discharge pipe (9) for pumping the liquid feed from the reservoir (3) into the said drinking channel (2);
c) control means for activating the said pump (4) at predetermined instants with a view to pumping a dose of liquid feed into the said drinking channel (2), characterized in that the said control means include a detection system (22) for the purpose of determining the lapse of time during which the piglets have consumed the dose pumped into the drinking channels (2, 2') and correction means for adapting a following dose on the basis of this time lapse.

2. Apparatus according to Claim 1, characterized in that the said correction means are provided with a view to increasing the next dose when the measured time lapse is less than a predetermined minimum time lapse and to decrease the dose when the measured time lapse is greater than a predetermined maximum time lapse.

3. Apparatus according to one of Claims 1 and 2, characterized in that the aforementioned control means are provided with a view to increasing the dose to be served on the basis of the stage of development of the piglets.

4. Apparatus according to one of Claims 1 to 3, characterized in that the said drinking channels (2, 2') are arranged substantially horizontally.

5. Apparatus according to one of Claims 1 to 4, characterized in that at least one end of the feed channel (2, 2') is equipped with an inclined plane (21) onto which the said discharge pipe (9, 9') of the pump (4) emerges so that the liquid feed supplied in a dosed manner by this discharge pipe spreads out sufficiently quickly over the entire length of the drinking channel (2, 2').

6. Apparatus according to one of Claims 1 to 5, characterized in that it includes at least two drinking channels (2, 2'), the said discharge pipe (9) of the pump (4) splitting into two parts with the aid of a T-piece (10) which comprises a chamber (14) which, at its top, has one or more perforations (15) for the passage of air (7).

7. Apparatus according to Claim 6, characterized in that the T-piece (10) does not have an open tap, to which end the T-piece (10) rests, via one arm (13) pointing obliquely upwards, on a support piece (12) on which, as desired, one of the branches (11, 11') can bear in order to prevent the milk from flowing out from this branch.

8. Apparatus according to one of Claims 1 to 7, characterized in that the said pump is a peristaltic pump (4) provided with at least one interchangeable hose (19) which passes through the said pump (14) and extends from one side of the pump practically as far as the bottom of the reservoir (3) for the liquid feed and which, on the other side, constitutes the discharge pipe (9) intended to convey the pumped liquid feed to the drinking channels (2, 2').

9. Apparatus according to Claim 8, characterized in that the said peristaltic pump (4) is equipped with at least two interchangeable hoses (19, 19') which emerge, in the case of each of them, on the one hand in the reservoir (3) and, on the other hand, each time direct the liquid feed towards one drinking channel (2, 2').

10. Apparatus according to any one of Claims 1 to 9, characterized in that it is equipped with a vocal module which reproduces the specific grunting of the sow and is provided with means intended to activate this vocal module when the pump has been activated.

## Patentansprüche

1. Vorrichtung für Dosierung von Naßfutter, wie Milch, insbesondere für von ihrer Mutter getrennte Ferkel und/oder für vom Mutterschwein aufgezogene Ferkel, wie auch für andere Tiere wie z. B. Welpen, wobei die Vorrichtung einen geschlossenen Mantel (1) für einen Vorratsbehälter (3) für das Naßfutter aufweist, und sie über folgendes verfügt:
a) eine Tränkrinne (2) im unteren Teil an mindestens einer Seite;
b) eine Pumpe (4) mit einer Ausgabeleitung (9) zum Pumpen von Naßfutter aus dem Vorratsbehälter (3) in die Tränkrinne (2);
c) eine Steuereinrichtung zum Aktivieren der Pumpe (4) zu vorgegebenen Zeitpunkten, um eine Naßfutterdosierung in die Tränkrinne (2) zu pumpen; **dadurch gekennzeichnet,** daß die Steuereinrichtung ein Meßsystem (22) zum Bestimmen einer Zeitspanne, in der die Ferkel die in die Tränkrinnen (2, 2') gepumpte Dosierung aufgebraucht haben, und eine Korrektureinrichtung aufweist, um die folgende Dosierung als Funktion der Zeitspanne anzupassen.

2. Vorrichtung nach Anspruch 1, **dadurch gekennzeichnet,** daß die Korrektureinrichtung vorhanden ist, um die nächste Dosierung zu erhöhen, wenn die gemessene Zeitspanne unter einer vorgegebenen Minimalzeitspanne liegt, und um die Dosierung zu verringern, wenn die gemessene Zeitspanne über einer vorgegebenen Maximalzeitspanne liegt.

3. Vorrichtung nach einem der Ansprüche 1 oder 2, **dadurch gekennzeichnet,** daß die genannte Steuervorrichtung vorhanden ist, um die auszugebende Dosierung als Funktion des Entwicklungszustands der Ferkel zu erhöhen.

4. Vorrichtung nach einem der Ansprüche 1 bis 3, **dadurch gekennzeichnet,** daß die Tränkrinnen (2, 2') im wesentlichen horizontal angeordnet sind.

5. Vorrichtung nach einem der Ansprüche 1 bis 4, **dadurch gekennzeichnet,** daß mindestens ein Ende der Tränkrinne (2, 2') mit einer schrägen Ebene (21), über der die genannte Ausgabeleitung (9, 9') der Pumpe (4) auf solche Weise versehen ist, daß das durch diese Ausgabeleitung auf dosierte Weise zugeführte Naßfutter sich ausreichend schnell über die gesamte Länge der Tränkrinne (2, 2') verteilt.

6. Vorrichtung nach einem der Ansprüche 1 bis 5, **dadurch gekennzeichnet,** daß sie mindestens zwei Tränkrinnen (2, 2') aufweist, wobei die genannte Ausgabeleitung (9) der Pumpe (4) mittels eines T-förmigen Verteilerstücks (10) in zwei Teile unterteilt ist, wobei das Verteilerstück eine Kammer (14) aufweist, die in ihrem oberen Teil ein Loch (15) oder mehrere für den Durchtritt von Luft (7) aufweist.

7. Vorrichtung nach Anspruch 6, **dadurch gekennzeichnet,** daß das T-förmige Verteilerstück (10) nur mit einem offenen Hahn versehen ist, wozu das Verteilerstück (10) über einen schräg nach oben gerichteten Arm (13) auf einem Halteteil (12) ruht, auf dem wahlweise einer der Zweige (11, 11') ruhen kann, um das Ausfließen von Milch aus diesem Zweig zu verhindern.

8. Vorrichtung nach einem der Ansprüche 1 bis 7, **dadurch gekennzeichnet,** daß die genannte Pumpe eine Peristaltikpumpe (4) ist, die mit mindestens einem nachgiebigen, austauschbaren Schlauch (19) versehen ist, der die Pumpe (14) durchsetzt und sich von einer Seite der Pumpe bis praktisch zum Boden des Vorratsbehälters (3) für das Naßfutter erstreckt, und der andererseits die Ausgabeleitung (9) bildet, die dazu dient, das zu den Tränkrinnen (2, 2') gepumpte Naßfutter zu leiten.

9. Vorrichtung nach Anspruch 8, **dadurch gekennzeichnet,** daß die genannte Peristaltikpumpe (4) mit mindestens zwei nachgiebigen, austauschbaren Schläuchen (19, 19') versehen ist, von denen jeder einerseits in den Vorratsbehälter (3) mündet und andererseits jedesmal Naßfutter zu einer Tränkrinne (2, 2') leitet.

10. Vorrichtung nach einem der Ansprüche 1 bis 9, **dadurch gekennzeichnet,** daß sie mit einem Stimmodul versehen ist, der das für ein Mutterschwein charakteristische Grunzen wiedergibt, und sie mit einer Einrichtung versehen ist, die dazu dient, dieses Stimmodul zu aktivieren, wenn die Pumpe aktiviert wurde.
